# EUROPEAN PATENT APPLICATION

(11) **EP 3 339 077 A1**
(43) Date of publication of application: **27.06.2018**
(21) Application number: 17207732.3
(22) Date of filing: 15.12.2017
(51) Int. Cl.: B60K 17/10, B60B 35/14

(54) **DEVICE FOR FACILITATING THE DRIVING OF WORKS VEHICLES DRIVEN BY HYDRAULIC OR HYDROSTATIC ENGINES**

(30) Priority: 22.12.2016 IT 201600129692 U
(71) Applicant: Romboli, Roberto, 47121 Forli' (IT)
(72) Inventor: Romboli, Roberto, 47121 Forli' (IT)
(74) Representative: Modiano, Micaela Nadia

(57) **Abstract**

A device that facilitates the driving of works vehicles driven by hydraulic or hydrostatic engines, by making it possible to stabilize the transmission of motion from the hydraulic engines to the corresponding wheels, in order to obtain a perfect synchronization thereof during straight-line advancement over ground, thus ensuring continuous traction in all working conditions and fluidity of maneuvering at any speed, even for zero-radius curves; at least two wheels (1) of the works vehicle, each one driven by a hydraulic assembly (2), are made mutually integral and synchronous by an assembly (6-7-6) in which (6) are two rotating shafts each of which is connected to a wheel (1) and which are made coaxial by way of a damping element (7) interposed between them.

## Description

The present invention relates to a device that facilitates the driving of works vehicles driven by hydraulic or hydrostatic engines. The need to provide this device arises mainly from the necessity to facilitate the manual driving of lawnmowers, but it also extends to all works vehicles that use independent hydraulic engines to drive the corresponding wheels.

In construction site and earth-moving machines, for example, a power transmission system is often adopted that is based on the pressure of an incompressible liquid, usually a special oil, and this choice is determined by the fact that applying hydraulic engines to the wheels is simpler and cheaper than installing a mechanical transmission.

Furthermore, a not inconsiderable advantage of hydraulic transmission over mechanical transmission is the ability to adjust the advancement speed continuously and to always reach the ideal speed for the conditions of the ground and of the grass. Besides, hydraulic transmission can entail a different response of the wheels owing to frequent and inevitable variations in flow-rate of the pumps that feed the respective hydraulic circuits. These variations in flow-rate, even if minimal, have the consequence that one wheel turns faster than the other, and this means that the driver of the works vehicle has to continuously correct the variations in direction during the advancement over ground.

The aim of the present invention is to offer a device that makes it possible to stabilize the transmission of motion from the hydraulic engines to the corresponding wheels, in order to obtain a perfect synchronization thereof during straight-line advancement over ground, thus ensuring continuous traction in all working conditions and fluidity of maneuvering at any speed, even for "zero-radius" curves.

Such device is described below with the aid of a drawing that schematically shows, solely for the purposes of non-limiting example, the operation of the device in question applied to a works vehicle that has, in this case, two wheels 1, each of which is driven by a hydraulic assembly 2.

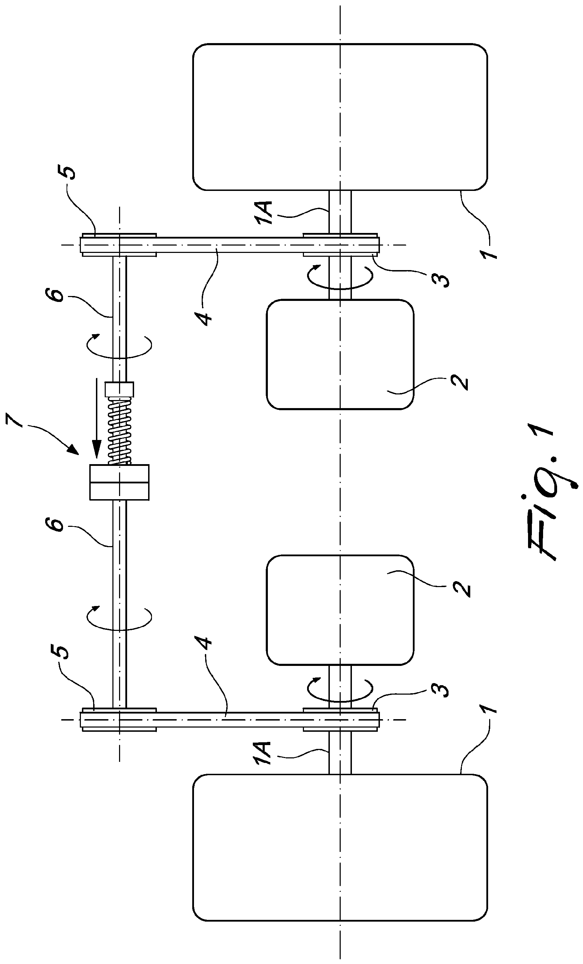

As can clearly be seen in the figure, by way of the two mechanical transmissions 3-4-5, via chain, via belt, or of any other conventional and adapted type, the two wheels 1 are made mutually integral in that a gearwheel 3 is keyed on the driving shaft 1A of each wheel 1, which rotates by virtue of the hydraulic assembly 2, and, by way of a belt or chain 4, transmits the rotary motion to a gearwheel 5, which is in turn keyed to a shaft 6. The coaxial coupling between the two shafts 6 occurs by way of a damping element 7 interposed between them, such as for example a joint with an even tension device, which is tensioned in order to compensate the minimal torsional variations between the two shafts 6 in order to keep them synchronous and, consequently, keeping the wheels 1 synchronized. When steering on a curve, the inevitable exceeding of the tension limit imposed on the element 7 will render one shaft 6 idle with respect to the other, until the two are later realigned and, therefore, until the synchronization of the wheels once the curve has been turned.

The accompanying drawing shows that the device 6-7-6 is accommodated in a forward position with respect to the wheels 1 and shows its function by virtue of the mechanical transmissions 3-4-5. This implementation choice can depend on many and varied reasons such as, for example, particular requirements of construction, of space occupation etc. Obviously, there is no reason why the assembly 6-7-6 cannot be positioned coaxially with the wheels 1 and that is to say with the two shafts 6, each of which is connected directly to a hydraulic assembly 2 and which are also coupled to each other by the damping element 7.

For the sake of simplicity, the accompanying drawing does not show the two closed hydraulic circuits for the hydraulic engines 2 of each wheel 1. Each hydraulic circuit, especially in large works vehicles, comprises a conventional hydraulic pump, delivery pipes and return pipes of the fluid used and suitable for the purpose, an accumulation tank of the same fluid plus a suitable number of valves. Differently, in smaller works vehicles, for example manually-conducted lawnmowers, integral pump/motor assemblies of the hydrostatic type are usually used for each wheel 1. Obviously, neither solution affects the application of the device in question, which is devised in order to obtain the synchronization of the wheels 1 that ensures the optimal operation of a works vehicle.

It is clear that, without prejudice to the general characteristics illustrated and described, the invention in question can be susceptible of further modifications or variations all of which are within the scope of the appended claims.

The disclosures in Italian Utility Model Application No. 202016000129692 (UA2016U275618) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for facilitating the driving of works vehicles driven by hydraulic or hydrostatic engines, said machines being of the type in which a hydraulic transmission is adopted that is based on the pressure of an incompressible liquid, usually a special oil, characterized principally in that at least two wheels (1) of the works vehicle, each one driven by a hydraulic assembly (2), are made mutually integral and synchronous by an assembly (6-7-6) in which (6) are two rotating shafts each of which is connected to a wheel (1) and which are made coaxial by way of a damping element (7) interposed between them, which is tensioned in order to compensate the minimal torsional variations between said two shafts (6) in order to keep them synchronous and, consequently, keeping the wheels (1) synchronized.

2. The device for facilitating the driving of works vehicles driven by hydraulic or hydrostatic engines according to claim 1, wherein the driving shaft (1A) of each wheel (1), which rotates by virtue of the hydraulic assembly (2), is connected by a mechanical transmission (3-4-5) to a shaft (6) of the assembly (6-7-6).

3. The device for facilitating the driving of works vehicles driven by hydraulic or hydrostatic engines according to claim 2, wherein the mechanical transmission (3-4-5) is via chain, via belt, or of any other conventional and adapted type.

4. The device for facilitating the driving of works vehicles driven by hydraulic or hydrostatic engines according to claim 1, wherein the damping element (7) is a joint with an even tension device.

5. The device for facilitating the driving of works vehicles driven by hydraulic or hydrostatic engines according to claim 1, wherein the driving shaft (1A) of each wheel (1), which rotates by virtue of the hydraulic assembly (2), is coaxial to a shaft (6) of the assembly (6-7-6), said assembly (6-7-6) being positioned coaxially to the wheels (1) and that is to say with the two shafts (6), each of which is connected directly to a hydraulic assembly (2) and which are also coupled to each other by the damping element (7).

6. The device for facilitating the driving of works vehicles driven by hydraulic or hydrostatic engines according to claim 1, wherein each hydraulic assembly (2) of each wheel (1) is powered by a closed hydraulic circuit.

7. The device for facilitating the driving of works vehicles driven by hydraulic or hydrostatic engines according to claim 6, wherein each hydraulic circuit corresponding to each wheel (1) comprises a conventional hydraulic pump, delivery pipes and return pipes of the fluid used and suitable for the purpose, an accumulation tank of the same fluid plus a suitable number of valves, or it is a circuit that uses, for each wheel (1), an integral pump/motor assembly, of the hydrostatic type.
